# EUROPÄISCHE PATENTANMELDUNG

(11) **EP 1 466 697 A2**
(43) Veröffentlichungstag der Anmeldung: **13.10.2004**
(21) Anmeldenummer: 04006667.2
(22) Anmeldetag: 19.03.2004
(51) Int. Cl.: B23Q 41/02, B23P 21/00, B23Q 41/00

(54) **Produktionssystem**

(30) Priorität: 21.03.2003 DE 20304653 U; 28.04.2003 DE 10319122; 10.10.2003 DE 10347956
(71) Anmelder: GROB-Werke Burkhart Grob e.K., 87719 Mindelheim (DE)
(72) Erfinder: Stave, Hinrich, Dr., 87719 Mindelheim (DE); Lutz, Heinrich, 87742 Dirlewang (DE)
(74) Vertreter: Pfister, Stefan, Dipl.-Phys.

(57) **Zusammenfassung**

Die Erfindung betrifft ein Produktionssystem, insbesondere Bearbeitungslinie, welche modular einerseits durch ein oder mehrere Prozeßmodule gebildet ist, die Werkstücke bearbeiten und andererseits durch mindestens ein Logistikmodul gebildet ist, und das Logistikmodul für einen Transport der Werkstücke sorgt, wobei das Logistikmodul als vorgefertigtes Systemmodul eine Vielzahl von Prozeßmodulen mit Werkstücken ver- und entsorgt und das Prozeßmodul als Systemmodul an dem Logistikmodul anschließbar ist.

## Beschreibung

Die Erfindung betrifft ein Produktionssystem, insbesondere Bearbeitungslinie für die Produktion und / oder die Bearbeitung von Werkstücken, Bauteilen oder dergleichen.

Produktionssysteme, insbesondere Bearbeitungslinien, bzw. Bearbeitungszentren sind bekannt. Derartige Produktionssysteme sind dabei so aufgebaut, dass die zu bearbeitenden Werkstücke bzw.

Bauteile auf einer Transportbahn zu den einzelnen Bearbeitungsmaschinen bzw. Zentren transportiert werden und in der Regel dann durch diese hindurchtransportiert werden. Es ist auch bekannt, durchgehende Transportbahnen mit Bearbeitungsmaschinen derart zu koppeln, dass an der Bearbeitungsmaschine ein Umsetzer, bzw. ein Übersetzer vorgesehen ist, der dann die Werkstücke oder Bauteile in die Bearbeitungsmaschine hinein transportiert. Hierzu wird bei bekannten Lösungen die Transportbahn unterbrochen. Das Bearbeitungszentrum selbst erfordert hierzu entsprechende Übersetzer bzw. Übergabemittel, die in die Transportbahn zu integrieren sind.

Es ist beispielsweise auch bekannt, einzelne Bearbeitungszentren mit einem gemeinsamen Übersetzer auszustatten. Parallel zu der Reihe von Bearbeitungszentren befindet sich ein Beladeband und Entladeband. Der Übersetzer ist zum Beispiel hierzu parallel verfahrbar und greift sich vom Beladeband ein Werkstück, setzt es in das Bearbeitungszentrum und entnimmt das fertig bearbeitete Werkstück hernach und übersetzt es wiederum auf ein Entladeband. Die Ausbildung derartiger Produktionssysteme durch die Kombination von Transportband, Übersetzer bzw. Be- und Entlader sind äußerst kompliziert und erfordert in der Regel einen erheblichen konstruktionstechnischen- und montagetechnischen Aufwand, um diese Bestandteile eines Produktionssystems miteinander zu verbinden.

Ausgehend von dem zuvor beschriebenen Stand der Technik ist es Aufgabe der Erfindung, ein möglichst einfach aufzubauendes Produktionssystem zur Verfügung zu stellen.

Die Erfindung geht von dem zuvor beschriebenen Stand der Technik aus und schlägt zur Lösung der gestellten Aufgabe ein Produktionssystem, insbesondere Bearbeitungslinie vor, welche modular einerseits, durch ein oder mehrere Prozessmodule gebildet ist, die Werkstücke bearbeiten und andererseits durch mindestens ein Logistikmodul gebildet ist und dieses Logistikmodul für einen Transport der Werkstücke sorgt, wobei das Logistikmodul als vorgefertigtes Systemmodul eine Vielzahl von Prozessmodulen mit Werkstücken ver- und entsorgt und das Prozessmodul aus Systemmodul an dem Logistikmodul anschließbar ist.

Die Aufgabe der Erfindung wird auch gelöst durch ein Produktionssystem, insbesondere Bearbeitungslinie für die Produktion und /oder die Bearbeitung von Werkstücken, Bauteilen oder dergleichen, bestehend aus unterschiedlichen, als Systemmodul ausgebildeten Modultypen für die Bearbeitung und den Transport, die in beliebiger Anzahl miteinander verbind- bzw. kombinierbar sind.

Durch die Ausbildung des Produktionssystems mit einem modulartigen Aufbau der einzelnen Systembestandteile bzw. Systemmodule ist es nunmehr möglich, für die unterschiedlichsten Aufgaben entsprechende Module für das Produktionssystem zu konzipieren und in beliebiger Reihenfolge und mit beliebiger Anzahl miteinander bzw. untereinander zu verbinden. So ist es beispielsweise möglich, eine Transportbahn modulhaft aufzubauen, die dann je nach entsprechender Anforderung des jeweiligen Vorhabens bzw. des jeweiligen Kundenwunsches, in entsprechender Länge mit den dazu erforderlichen Verzweigungseinheiten entlang einer Bearbeitungslinie mit Bearbeitungsmaschinen bzw. Stationen angeordnet werden kann. Die einzelnen Module sind dabei insbesondere so gestaltet, dass sie auch leicht transportierbar sind. Insbesondere bewirkt der modulhafte Aufbau, dass die Module für einen Transport überhaupt nicht bzw. nur minimal demontiert werden müssen. Dies reduziert den Aufwand derartiger Arbeiten in erheblichem Maße, da es sich dabei insbesondere im Wesentlichen auch um handwerklich durchzuführende Arbeiten mit relativ hohem, manuellen Aufwand handelt. Die Konzeption des Produktionssystems mit einem modulhaften Aufbau konsequent durchgeführt, ermöglicht neben dem modularen Aufbau der Transportbahnen auch einen solchen Aufbau für die einzelnen Bearbeitungsstationen, welche beispielsweise als Prozessmodul dann ausgebildet sind, ebenfalls in der zuvor beschriebenen Weise, um eine Kombination mit den Transportbahnen bzw. Modulen und anderen Systemmodulen, wie beispielsweise unterschiedlichsten Bearbeitungsstationen, zu kombinieren.

Eine Weiterbildung des erfindungsgemäßen Produktionssystems ist demnach dadurch gekennzeichnet, dass das Prozessmodul und das Logistikmodul voneinander getrennte Systemmodule sind.

Gemäß einer vorteilhaften Weiterbildung des erfindungsgemäßen Produktionssystems ist es vorgesehen, dass das Prozessmodul eine Werkstückver- bzw. -entsorgungseinheit aufweist, die das, bzw. die Werkstücke von dem am Prozessmodul vorbeiführenden Logistikmodul in das Prozessmodul bringt und hernach wieder zum Logistikmodul transportiert.

Dazu ist es von Vorteil, wenn das Prozessmodul entweder direkt am Logistikmodul angeordnet ist oder über eine Werkstückver- bzw. -entsorgungseinheit mit Werkstücken ver- und entsorgt wird und nur das Logistikmodul für einen Transport der Werkstücke zu den Prozessmodulen sorgt. Hierdurch wird erreicht, dass das Logistikmodul als einheitliche, geschlossene Transportbahn mit dem bereits beschriebenen modulhaften Aufbau selbstverständlich ausgeführt werden kann und somit eine Rationalisierung der Fertigung für derartige Logistikmodule konsequent ermöglicht ist. So ist es beispielsweise durch diesen modulhaften Aufbau jetzt ermöglicht, dass das Logistikmodul in weitere, ebenfalls modulhaft ausgebildete Bestandteile, unterteilbar ist. Es ist jedoch auch möglich, bestimmte Maschineneinheiten innerhalb eines derartigen Moduls dann vorzusehen.

Eine Weiterbildung des erfindungsgemäßen Produktionssystems zeichnet sich demnach dadurch aus, dass das Logistikmodul für den Transport der Werkstücke innerhalb des Systems eine Transporteinheit aufweist.

Erfindungsgemäß wurde auch gefunden, dass es von Vorteil ist, wenn das Logistikmodul für den Transport von Energie und für den Prozess notwendiger Medien eine Leitungseinheit sowohl für die Versorgung der Prozessmodule wie auch für deren Entsorgung aufweist.

Eine spezielle Ausführungsform des erfindungsgemäßen Produktionssystems zeichnet sich dadurch aus, dass das Logistikmodul durch ein Gestell angegeben ist, welches etagenartig angeordnet wenigstens zwei Transportmodule aufweist, wodurch unterhalb der Transportmodule ein Entsorgungsmodul bzw. ein Teil davon, beispielsweise eine Entsorgungsrinne für ablaufendes Kühl- bzw. Schmiermittel, Späne oder dergleichen angeordnet ist und in einer weiteren, durch das Gestell angegebenen Ebene das Versorgungsmodul bzw. ein Teil davon, beispielsweise Rohrleitungen für Kühlwasser, Prozessgase, Kabel oder dergleichen angeordnet ist.

Zusammenfassend sind für das Logistikmodul nach einer oder mehrerer der zuvor beschriebenen Ausführungsformen folgende Aufgaben und Vorteile angegeben:
- Einheitlicher Transport der Werkstücke innerhalb des gesamten Systems,
- Versorgung der Prozessmodule mit Energie und Medien durch eine zentrale Einheit,
- die Versorgung der Prozessmodule durch das Logistikmodul betrifft beispielsweise: elektrische Energie, zum Beispiel Strom in Stromschienen geführt, Hydrauliköl, Druckluft, Prozessgase, Kühlflüssigkeit für Antriebe, temperiertes Wasser zur thermischen Stabilisierung der Prozessmodule und / oder der Werkstücke, Kühlschmiermittel für spanende Bearbeitungsprozesse, gegebenenfalls in verschiedenen Druckstufen und Filterfeinheitsgraden,
- Abfuhr von Rest- und Hilfsstoffen aus den Prozessmodulen, z.B. Späne, Prozessabfälle, Kühlschmiermittel, Dämpfe, Nebel, Rauch,
- Bereitstellung der Leitungen für den Datenaustausch innerhalb des Systems und nach außen,
- Schutz von Personen vor gegebenenfalls gefahrbringenden Bewegungen oder vor Lärmquellen innerhalb des Logistikmoduls, realisiert durch Integration von erforderlichen Schutzeinrichtungen oder Verkleidungen in das Modul,
- Bereitstellung standardisierter Schnittstellen zum Anschluss von anderen Systemmodulen.

Das Modul ist demnach ausgeführt als vormontiertes Gestell, welches eine oder mehrere Transportbahnen für Werkstücke enthält. Diese Bahnen können zum Beispiel neben- oder übereinander angeordnet sein. Die Bahnen können beispielsweise auch als Laufbänder, Rollen- oder Friktionsrollenbänder ausgeführt sein. Die Werkstücke werden auf den Bändern, vorzugsweise aber nicht zwingend auf Paletten mit standardisierten Schnittstellen transportiert. Die Werkstücke können auch direkt, ohne Palette, transportiert werden. In dem Gestell werden weiterhin angeordnet, Kabel, Schläuche und Rohre zur Medienver- und -entsorgung der Systemmodule sowie für den Datenaustausch, gegebenenfalls Schienenverteiler für elektrische Energie und / oder Verteiler für pneumatische Energie, Förderer, Förderbänder und/oder Förderrinnen für den Abtransport von Prozessabfällen z. B. Kühlschmiermittel und Späne bei spanender Bearbeitung. Dabei werden diese Förderer oder Rinnen vorzugsweise im unteren Bereich des Gestells angebracht. Es ist dabei vorgesehen, Schutzverkleidungen, schalldämmende Verkleidungen, so weit erforderlich an dem Logistikmodul anzuordnen. Es ist weiterhin vorgesehen, Schnittstellen zum Anbau weiterer Systemmodule vorzusehen. Es ist auch vorgesehen, das Logistikmodul als komplett vormontierte und prüfbare Einheit zu konzipieren. Damit kann es in verschiedenen, gegebenenfalls standardisierten Längen realisiert werden, um daraus beliebige Produktionssysteme bilden zu können. In Verbindung mit vorzugsweise vorzusehenden Verzweigungsmodulen können beliebige Systemanordnungen realisiert werden. Dies können ein oder mehrere Stränge mit beliebigen Querverbindungen und geschlossenen Umläufen sein.

Eine Weiterbildung des erfindungsgemäßen Produktionssystems sieht demnach vorteilhafterweise vor, dass ein Verzweigungsmodul als Systemmodul vorgesehen ist, welches dazu dient, mehrere Logistikmodule winkelförmig in einer Ebene und / oder in verschiedenen Ebenen miteinander zu verbinden.

Dabei ist es von Vorteil, wenn diese Verzweigungsmodule an den Transportmodulen korrespondierend für eine Übergabe bzw. Übernahme zu den Prozessmodulen angeordnet sind.

Eine vorteilhafte Weiterbildung der Erfindung sieht auch vor, dass das Verzweigungsmodul Be- und Entlademodule und / oder Ver- bzw. Entpackungsmodule bzw. Stationen umfasst.

Ein weiterer Aspekt des erfindungsgemäßen Produktionssystems besteht darin, dass das Verzweigungsmodul durch mindestens je eine Weiche, Drehstation, Aufzugsstation zur Verteilung der Werkstücke bzw. der Paletten in unterschiedliche Transportebenen und Um- bzw. Übersetzer oder dergleichen angegeben ist.

Entsprechend einer vorteilhaften Weiterbildung des Produktionssystems, wie zuvor beschrieben, ist es vorgesehen, dass das Produktionssystem ein Versorgungsmodul als Systemmodul aufweist, welches die Versorgung der Prozessmodule mit Energie und Medien gewährleistet.

Eine Weiterbildung des erfindungsgemäßen Produktionssystems zeichnet sich dadurch aus, dass ein Entsorgungsmodul als Systemmodul vorgesehen ist, um Prozessabfälle und verbrauchte Hilfsstoffe zu sammeln und gegebenenfalls aufzubereiten. Dabei hat es sich als Vorteil erwiesen, wenn ein aus Versorgungsmodul und Entsorgungsmodul gebildetes Betriebsmodul vorgesehen ist, welches sowohl Versorgungs- als auch Entsorgungsaufgaben des Produktionssystems als zusammenfassendes Systemmodul übernimmt.

Ein weiterer Aspekt des erfindungsgemäßen Produktionssystems ist dadurch angegeben, dass die Systemmodule vormontiert und als Einheit ohne oder mit minimalem Demontageaufwand transportierbar ausgebildet sind. Wie bereits beschrieben ermöglicht diese konsequente Ausführung im modulhaften Aufbau Einsparungen von Montage- bzw. Demontagearbeiten im Vorfeld der eigentlichen Montage der Bearbeitungslinie bzw. des Produktionssystems insgesamt. Auch werden späteres Umsetzungen an andere Produktionsstandorte erheblich erleichtert.

Eine spezielle Ausbildung des erfindungsgemäßen Produktionssystems ist gekennzeichnet durch ein Logistikmodul, vorzugsweise mit eigenem modularen Aufbau, welches für
- den Transport der Werkstücke innerhalb des Systems,
- die Versorgung der Prozessmodule mit Energie und Medien,
- die Abfuhr von Prozessrest- und Hilfsstoffen aus dem Prozessmodulen,
- die Bereitstellung der Datenübertragungsmittel für den Informations- und Datenaustausch innerhalb des Systems,
- den Schutz von Personen vor Gefährdungen wie gefahrbringenden Bewegungen, Lärm, Verbrennungen bzw. Verbrühungen oder dergleichen ausgebildet ist.

Damit sind sehr vielfältige Logistikaufgaben beziehungsweise Hilfsprozesse innerhalb des Produktionssystems bereits durch ein Logistikmodul, wie zuvor beschrieben, gelöst. Selbstverständlich ist auch hier ein modularer Aufbau der einzelnen Anlagenteile durchaus sinnvoll. Es ist jedoch erfindungsgemäß auch vorgesehen, dass Anlagen beziehungsweise Anlagenteile in ein Logistikmodul integrierbar sind, welche keinen eigenen modularen Aufbau aufweisen.

Erfindungsgemäß ist es von Vorteil, wenn entsprechend einer vorteilhaften Weiterbildung der Erfindung ein Logistikmodul vorgesehen ist, welches mit Schnittstellen zum Anschluss bzw. Verbinden mindestens eines Prozessmoduls und / oder mindestens eines weiteren Logistik- oder Transportmoduls oder von Versorgungsmodulen, Verzweigungsmodulen, Anlagen oder Anlagenteilen, versehen ist.

Von Vorteil ist es weiterhin, wenn das Prozessmodul durch Maschinen zur Bearbeitung von Werkstücken, beispielsweise zur Zerspanung, Umformung, zum Fügen bzw. Trennen durch Prüfstationen, Montagestationen, Justagestationen, Oberflächenbehandlungsstationen, Ver- oder Entpackungsstationen, Kennzeichnungsstationen zur Kennzeichnung von Werkstücken, Palettenbe- bzw. -entladestationen und Reinigungsstationen ausgebildet ist. Selbstverständlich ist es dabei auch von Vorteil, wenn sich die vorgenannten Anlageteile ebenfalls durch einen modulhaften Aufbau auszeichnen.

Eine Weiterbildung des erfindungsgemäßen Produktionssystems sieht vor, dass das Versorgungsmodul derart ausgebildet ist, dass es Strom, Flüssigkeiten, Prozessgase, Gase und / oder unter Druck stehende Gase bzw. andere in den Prozessmodulen benötigten Medien aufbereitet und / oder zur Verfügung stellt.

Von besonderem Vorteil ist es dabei, wenn das Versorgungsmodul zentral die Bereitstellung der in den Prozessmodulen benötigten Medien zumindest für einen Teil der Prozessmodule, vorzugsweise für alle in dem Produktionssystem vorhandenen Prozessmodule gleichzeitig übernimmt. Dies ermöglicht eine weitere rationelle Zusammenfassung von bisher dezentral an den einzelnen Anlagenteilen, Bearbeitungsmaschinen und dergleichen vorgesehenen Versorgungssysteme. So war es beispielsweise nach dem Stand der Technik bisher üblich, jedes Prozessmodul als Bearbeitungsstation bzw. Bearbeitungsmaschine mit eigenen Versorgungseinrichtungen wie Pumpen, Filter, Absauganlagen und dergleichen zu versehen. Dies erforderte eine Vielzahl von Einzelanlagenteilen beziehungsweise -aggregaten, die jetzt zentral in einem Versorgungsmodul zusammengefasst werden können. Dies vereinfacht zum einen den Aufbau der Prozessmodule selbst und selbstverständlich auch den Aufbau des gesamten Produktionssystems.

Eine Weiterbildung des erfindungsgemäßen Produktionssystems sieht vor, dass in gleicher Weise, wie zuvor für das Versorgungsmodul beschrieben, ein zentrales Entsorgungsmodul vorgesehen ist, welches zentral der Entsorgung für das Produktionssystem insgesamt, zumindest aber für einen Teil der Prozessmodule dient. Dabei ist es vorzugsweise, wie bereits oben beschrieben vorgesehen, dass das Entsorgungsmodul für alle Prozessmodule die Entsorgung von Abfällen, verbrauchten Hilfsstoffen durch die zentrale Sammlung und Aufbereitung dieser Stoffe realisiert. Auch hierbei kann eine Vielzahl von notwendigen Komplettierungsteilen, Einzelanlagen beziehungsweise -aggregaten an den Prozessmodulen eingespart werden, da jetzt eine zentrale Erfassung dieser Medien erfolgt. Dadurch können Pumpen, Absauganlagen, Filteranlagen und dergleichen in gleicher Weise eingespart werden, wie das zuvor beschrieben ist. Die Zusammenfassung der bisher in den einzelnen Prozeßmodulen angeordneten Entsorgungsanlagenteile in dem Entsorgungsmodul bietet den Vorteil, diese gegebenenfalls mit etwas höherer Leistungsfähigkeit in dem Entsorgungsmodul anzuordnen und diese dafür in den Prozessmodulen einzusparen. Kumuliert man die zuvor beschriebene Lösung für das Versorgungsmodul und für das Entsorgungsmodul bei einem Produktionssystem mit beispielsweise fünfzehn unterschiedlichen Prozessmodulen, so ergibt sich eine erhebliche Anzahl von Anlagenteilen, die durch diese Rationalisierungsmaßnahme eingespart werden können.

Von besonderem Vorteil ist es hierbei, wenn das Entsorgungsmodul zumindest einen Teil der verbrauchten Hilfsstoffe, Kühlmittel, Prozessgase und dergleichen sammelt, aufbereitet und dem Produktionskreislauf des Produktionssystems dann wieder zuführt. Hierdurch ergeben sich weitere Rationalisierungseffekte, die sich in dem Zusammenfassen der zu realisierenden Aufgaben in einem einheitlichen Entsorgungsmodul ergibt.

Eine Weiterbildung des erfindungsgemäßen Produktionssystems sieht demnach vor, dass ein Entsorgungsmodul vorgesehen ist, welches zentral für mehrere, vorzugsweise für alle Prozessmodule die Absaugung von Dämpfen, Nebel, Rauch oder dergleichen über eine gemeinsame zentrale Absauganlage vornimmt.

Ein weiterer Aspekt der Erfindung ist dadurch angegeben, dass das Transportmodul durch Förderbahnen, Laufbänder, Förderbänder, Gleitbahnen oder dergleichen angegeben ist. Damit ist gewährleistet, dass innerhalb des Logistikmoduls das Transportmodul sich insgesamt dem modulhaften Aufbau des gesamten Produktionssystems unterordnet. Es ist selbstverständlich jedoch auch möglich, innerhalb eines Transportmoduls die bisher bekannten Anlagenteile wie Förderbahnen, Friktionsrollenbahnen und dergleichen einzusetzen. Sie sind dann lediglich dem modulhaften Aufbau des gesamten Systems anzupassen.

Entsprechend einer vorteilhaften Weiterbildung der zuvor beschriebenen Lösungen ist es vorgesehen, dass das Transportmodul durch mindesten zwei- oder mehretagig übereinander angeordnete Förderbahnen angegeben ist.

Selbstverständlich ist es auch möglich, dass das Transportmodul sich dadurch auszeichnet, dass wenigstens zwei oder mehrere nebeneinander angeordnete Förderbahnen vorgesehen sind.

Von besonderem Vorteil ist es, wenn das Versorgungsmodul, das Entsorgungsmodul oder das Betriebsmodul ein schallgedämmtes Gehäuse aufweist, welches die den Lärm erzeugenden Aggregate wie Kompressoren, Pumpen, Verdichter, Vakuumpumpen und dergleichen aufnimmt.

Es hat sich weiter herausgestellt, dass es von Vorteil ist, wenn das Gehäuse des Versorgungsmoduls bzw. des Entsorgungsmoduls oder des beide Module zusammenfassenden Betriebsmoduls eine Klimatisierung bzw. Kühlung aufweist, durch die die von den Aggregaten erzeugte Abwärme abgeführt wird.

Als weiter vorteilhaft hat es sich heraus gestellt, dass das Versorgungsmodul Baugruppen für eine gemeinsame Versorgung mehrerer, vorzugsweise aller Prozessmodule beinhaltet, wie beispielsweise Hydraulikaggregat, Kühl- Schmiermittelaggregat, Druckluftaggregat, Aggregat zur thermischen Stabilisierung der Prozessmodule beispielsweise durch Bereitstellung temperierten Wassers, Gasversorgungsaggregat, Energieversorgungs- und Schaltstationen bzw. -aggregate.

Vorteilhaft an dem erfindungsgemäßen Produktionssystem ist auch, wenn es sich durch eine zentrale Energieversorgung zum Beispiel berührungsfrei geführte Stromschienen mit Trennschaltern und mit kontaktfreiem Abgriff oder durch Kabel geführt auszeichnet, wobei die zentrale Energieversorgung vorzugsweise in dem bzw. den Versorgungsmodul (en) integriert ist.

Die zentrale Energieversorgung hat die Aufgabe Strom, Flüssigkeiten und Gase in der von den jeweiligen Systemmodulen benötigten Form aufzubereiten und zur Verfügung zu stellen. Dies kann beispielsweise durch einen zentralen Einspeisepunkt für elektrische Energie für das Gesamtsystem geschehen. Gleichzeitig können Hauptschalter, Sicherung, Transformatoren zur Anpassung an unterschiedlichste Spannungen und Netzformen vorgesehen sein. Weiterhin ist es von Vorteil, wenn Frequenzumrichter zur Anpassung an unterschiedliche Netzfrequenzen, gegebenenfalls auch eine Notstromerzeugung, Batterien, Akkumulatoren oder Generatoren, vorgesehen sind. Die Versorgung mit Druckluft, deren Filterung, deren Druckregelung selbst, die Trocknung der Luft aber auch die Beölung der Druckluft, falls erforderlich, können ebenfalls zentral durch ein Versorgungsmodul realisiert werden. Des weiteren dient das Versorgungsmodul der Versorgung aller Anlagenteile des Produktionssystems mit Kühlflüssigkeit. Dazu enthält das Versorgungsmodul beispielsweise ein Kühlaggregat, welches alle Module mit Kühlmittel versorgt. Idealerweise sind auf den Prozessmodulen keine weiteren Wärmetauscher und Temperaturregler dann erforderlich. Die Flüssigkeit kann nicht nur zum Kühlen sondern auch zum gezielten Erwärmen innerhalb der Prozessmodule benutzt werden. Gegebenenfalls sind mehrere Kreisläufe für Kühlung bzw. Erwärmung vorzusehen. Das Versorgungsmodul kann auch eine zentrale Versorgung des Produktionssystems mit Laserenergie vorsehen. Auch Prozessgase sowie die Aufbereitung von Prozessgasen für die Prozessmodule ist in dem Versorgungsmodul zentral vorgesehen. Gleiches gilt für das Schmiersystem, welches beispielweise durch ein zentrales Schmieraggregat für das Gesamtsystem zur Verfügung gestellt ist. Die Prozessflüssigkeiten werden ebenfalls innerhalb des Versorgungsmoduls zusammengefasst. Dies kann beispielsweise dadurch realisiert werden, dass Tanks, Pumpen, Druckregler und Filter für die Prozessflüssigkeiten in dem Versorgungsmodul vorgesehen sind. Es ist weiterhin vorgesehen, dass Hochdruckschmiermittel für spanende Bearbeitungsprozesse zentral für das gesamte Produktionssystem durch das Versorgungsmodul bereitgestellt wird. Falls erforderlich ist es dann lediglich nur noch notwendig, in den Prozessmodulen gegebenenfalls separate Druckregler vorzusehen.

Die Erfindung zeichnet sich auch aus durch ein gemeinsames Brandschutzmodul bzw.-system. Dieses Brandschutzmodul kann beispielsweise eine Sprinkleranlage sein, welche ebenfalls modulhaft aufgebaut wird und in das Produktionssystem insgesamt integriert wird.

Das erfindungsgemäße Produktionssystem zeichnet sich weiter dadurch aus, dass die unterschiedlichen Teilsysteme bzw. Modularten innerhalb des Versorgungsmoduls, aber auch innerhalb des gesamten Systems, redundant ausgeführt bzw. ausgebildet sind.

Des Weiteren schlägt die Erfindung vor, daß das Prozeßmodul ein Logistikelement aufweist, und das Prozeßmodul an dem Logistikelement mit dem Logistikmodul anschließbar ist. Es ist durchaus hilfreich und günstig, wenn an dem Prozeßmodul ein kleines, gegebenenfalls kurzes Logistikelement angeordnet ist, welches insbesondere für den Transport des Werkstückes innerhalb des Prozeßmodules dient. Es stellt damit auch die Schnittstelle für den Anschluß zu dem Logistikmodul zur Verfügung.

In gleicher Weise ist es von Vorteil, daß das Prozeßmodul ein Versorgungselement aufweist, welches an das Versorgungsmodul anschließbar ist. Das Prozeßmodul, zum Beispiel eine spanabhebende Bearbeitungsmaschine, wird mit Spül- bzw. Kühlflüssigkeit betrieben. Diese Medien sind hernach zu entsorgen. Da die Medien unmittelbar unterhalb der Bearbeitungsmaschine im Prozeßmodul anfallen, ist es günstig, das diesbezügliche Versorgungselement, also zum Beispiel eine Späneförderrinne oder dergleichen als Versorgungselement im Prozeßmodul anzuordnen, welches dann mit dem Versorgungsmodul, welches Teil des Logistikmodules ist, verbunden wird.

Gemäß der Erfindung ist es auch von Vorteil, daß ein zentrales Versorgungsmodul existiert. Dieses zentrale Versorgungsmodul dient dazu, eine Vielzahl von Prozeßmodulen zu versorgen. Günstigerweise ist vorgesehen, daß ein integriertes Ver- und Entsorgungsmodul existiert, da insbesondere zum Beispiel bei der Aufbereitung von Hilfsstoffen, die ja als zu entsorgendes Gut anfallen, die Hilfstoffe nach der Aufbereitung sofort wieder in das Versorgungsmodul eingespeist werden können und zur Verfügung gestellt werden können.

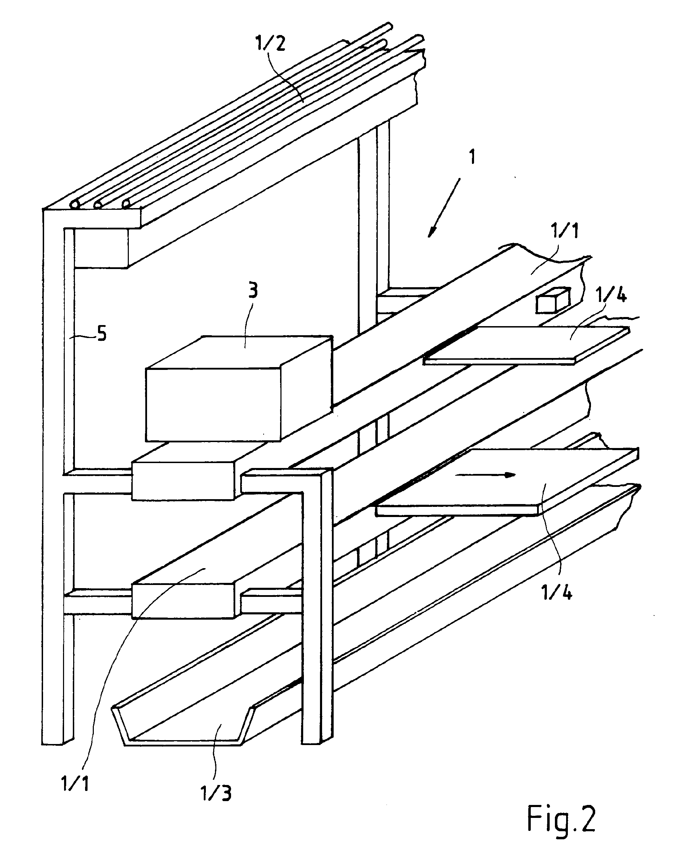

Auch ist es von Vorteil, daß ein gemeinsames Gestell des Logistikmodules für das Transportmodul und für das Ver- bzw. Entsorgungsmodul vorgesehen ist. Eine solche Variante ist zum Beispiel in Fig. 2, 4 und 5 gezeigt. Eine solche Variante ist im Hinblick auf die Zugänglichkeit der gesamten Produktionslinie von Vorteil, da in jedem Fall die Prozeßmodule einseitig zugänglich bleiben. Alternativ hierzu ist es möglich, daß für das Transportmodul einerseits und für das Ver- bzw. Entsorgungsmodul andererseits je eigene Gestellt vorgesehen sind. Die Module können dabei beidseitig bezüglich des Prozeßmodules oder jeweils einseitig gegebenenfalls nebeneinander oder übereinander angeordnet sein.

Zusammenfassend wird festgestellt, dass die zentrale Energieund Medienaufbereitung beispielsweise im Versorgungsmodul unter anderem folgende Vorzüge besitzt:
- Eine Vielzahl von Kleinaggregaten in bzw. auf den Prozessmodulen wird vermieden. Dadurch ergibt sich eine Kosteneinsparung, vereinfachte Wartung, z. B. durch einen nur noch an einer zentralen Einheit bzw. einem zentralen Aggregat notwendigen Ölwechsel, eine höhere Verfügbarkeit durch eine geringere Komplexität des Gesamtsystems.
- Verbrauchsspitzen einzelner Prozessmodule gleichen sich zumindest teilweise wieder aus, wodurch die insgesamt installierte Leistung geringer gehalten werden kann.
- Bessere Regelbarkeit beispielsweise von Kühlkreisläufen, weil Lastspitzen egalisiert werden können und beispielsweise ein großer bzw. größerer zentraler Tank vorgesehen werden kann.
- Es ergibt sich weiterhin eine Platzeinsparung bei den Prozessmodulen.
- Durch die Zentralisierung von Lärmquellen wie Pumpen und Lüfter ergibt sich ein vereinfachter und verbesserter Schallschutz. Dies gilt in gleicher Weise auch für die Anlagenteile der Entsorgungsmodule.

Die Erfindung wird nachfolgend an Hand von Ausführungsbeispielen und Zeichnungen weiter beschrieben.

Es zeigen:
- Fig.1: Blockschaltbild einer Ausführungsform des erfindungsgemäßen Produktionssystems,
- Fig.2: Ausführung eines Logistikmoduls nach der Erfindung,
- Fig.3: Teilausschnitt eines Blockschaltbilds einer weiteren Ausführungsform der Erfindung,
- Fig.4: in einer Draufsicht ein weiteres Ausführungsbeispiel des erfindungsgemäßen Produktionssystems und
- Fig. 5, 6: jeweils in einer Ansicht Details des erfindungsgemäßen Produktionssystems, entsprechend Pfeil V, VI in Fig. 4.

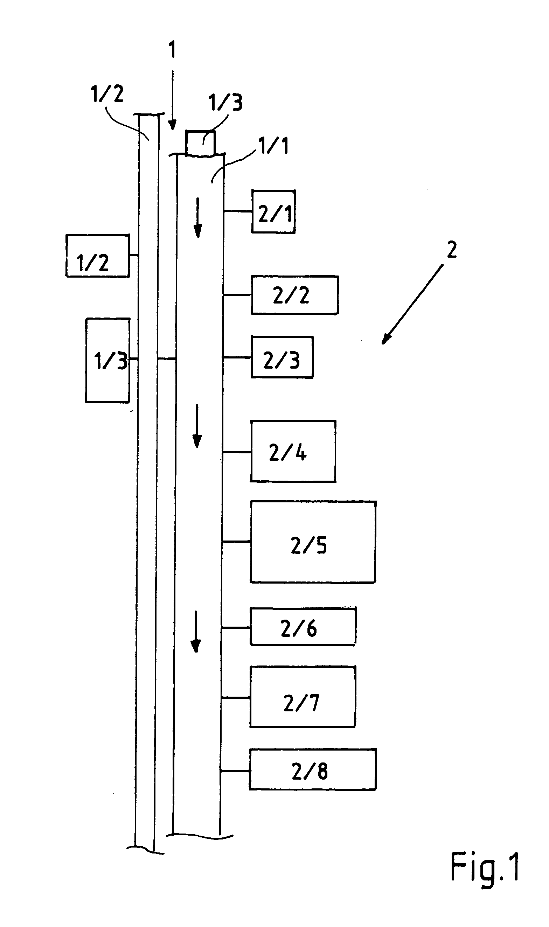

Die Figur 1 zeigt ein Blockschaltbild einer Ausführungsform des erfindungsgemäßen Produktionssystems. Mit dem Pfeil mit dem Bezugszeichen 1 ist das Logistikmodul bezeichnet. Das Logistikmodul 1 besteht aus einem Transportmodul 1/1, einem Versorgungsmodul 1/2, einem Entsorgungsmodul 1/3 sowie einem in dieser Darstellung nicht dargestellten Verzweigungsmodul 1/4. Das Transportmodul 1/1 kann dabei eine Rollenbahn, eine Gleitbahn, eine Friktionsrollenbahn oder dergleichen sein, die beispielsweise Werkstücke 3 zur Bearbeitung an die Prozessmodule 2 heranführt und sie gegebenenfalls dort über Verzweigungsmodule 1/4 an diese übergibt.

Das Versorgungsmodul 1/2 ist in dieser Ausführungsform zweiteilig ausgebildet. So besteht es beispielweise aus einer Versorgungsbahn, auf welcher sich die einzelnen Leitungen zur Versorgung der Prozessmodule 2 befinden. Das Kästchen mit dem Bezugszeichen 1/2 bezeichnet ein Versorgungsmodul welches zentral, beispielsweise die Aufbereitung der Prozessmedien, wie Energie, Gas, Druck und dergleichen, wie zuvor beschrieben, zur Verfügung stellt. Das Entsorgungsmodul 1/3 ist ebenfalls zweiteilig dargestellt, indem beispielsweise eine zentrale Entsorgungsstation vorgesehen ist, in der alle anfallenden zu entsorgenden Hilfsstoffe gesammelt und / oder aufbereitet werden. Dies ist mit dem Kästchen, welches mit dem Bezugszeichen 1/3 versehen ist, schematisch angedeutet.

Unterhalb des Transportmoduls 1/1 befindet sich eine zentrale Sammelwanne, in der Späne und abfließendes Kühlwasser beispielsweise aufgefangen und in das mit dem Kästchen versehene Entsorgungsmodul 1/3 transportiert werden. Dort werden die Medien getrennt, gereinigt und gegebenenfalls dann wieder dem Versorgungsmodul 1/2 zugeführt oder aber direkt an die Prozessmodule 2 weiter gegeben. Die einzelnen Kästchen der Prozessmodule 2 bezeichnen das Zerspanungsmodul 2/1, ein Prüfmodul 2/2, ein Montagemodul 2/3, ein Justagemodul 2/4, ein Oberflächenbehandlungsmodul 2/5, ein Reinigungsmodul 2/6, ein Kennzeichnungsmodul 2/7 und ein Verpackungsmodul 2/8. Die Aufstellung ist gewählt, um darzustellen, wie anhand der einzelnen Module ein Produktionssystem in unterschiedlichster Art und Weise durch den modulhaften Aufbau gestaltet werden kann. Dies ist erfindungsgemäß jetzt ermöglicht. Die einzelnen Modulbestandteile sind dabei sowohl in der Größe als auch in ihrer Funktion aufeinander abgestimmt und können in beliebiger Weise miteinander kombiniert werden. Der Vorteil eines solchen modulhaften Aufbaus wird klar ersichtlich, indem die einzelnen Modularten auch unabhängig voneinander gefertigt werden können. Es ist lediglich erforderlich, alle Module mit entsprechenden Schnittstellen zu versehen, damit ein problemloses Aneinanderfügen bzw. Kombinieren miteinander möglich ist.

Die Figur 2 zeigt eine Ausführungsform eines Logistikmoduls 1 Der Pfeil mit dem Bezugszeichen 1 bezeichnet dabei das gesamte Logistikmodul. Mit dem Bezugszeichen 1/1 sind zwei Transportmodule bezeichnet, welche etagenartig übereinander angeordnet sind. Auf dem oberen Transportmodul 1/1 befindet sich ein Werkstück 3, welches auf dem Transportmodul 1/1 zu einem Prozessmodul 2 transportiert wird. Mit dem Bezugszeichen 1/4 sind an den jeweiligen Transportmodulen 1/1 Verzweigungsmodule angegeben. Dieses ist ebenfalls nur schematisch angedeutet und keineswegs als technische Zeichnung zu verstehen. Mittels der Verzweigungsmodule 1/4 können die Werkstücke 3 in die einzelnen Prozessmodule 2 transportiert werden.

Es ist jedoch auch möglich, unterschiedliche Logistikmodule miteinander zu kombinieren bzw. zu verzweigen, so dass unterschiedlichste Prozessströme realisiert werden können. Die Verzweigungsmodule 1/4 dienen dann der Verteilung in die entsprechenden Ströme und Ebenen. Selbstverständlich ist auch ein etagenartiger Austausch der Werkstücke 3 auf die jeweiligen Transportmodule 1/1 vorgesehen. Mit dem Bezugszeichen 5 ist das Gestell für das gesamte Logistikmodul bezeichnet. Das Gestell 5 trägt dabei sowohl die Transportmodule 1/1, als auch Versorgungsmodul 1/2 und Entsorgungsmodul 1/3. Das Versorgungsmodul 1/2 ist dabei auf der linken Seite an dem Gestell 5 in einer weiteren, oberhalb der Transportmodule 1/1 befindlichen Ebene, angeordnet. Hierbei sind Leitungen bzw. Kabel als Bestandteile des Versorgungsmoduls 1/2 lediglich schematisch angedeutet. Das Entsorgungsmodul 1/3 bzw. ein Teil davon ist als Wanne ausgebildet und dient der Sammlung der Abfälle bzw. von abfließendem Kühl- bzw. Schmiermittel. Diese Wanne selbst kann entsprechende Transportmittel aufweisen, die beispielsweise die Späne zu einer zentralen Spansammelanlage führen. Hierzu kann beispielsweise auch eine zentrale Einheit dienen, wie sie beispielsweise in der Figur 1 mit dem Bezugszeichen 1/3 als Kästchen dargestellt bezeichnet ist. Es ist selbstverständlich erfindungsgemäß auch vorgesehen, dass man ein Logistikmodul derart aufbaut, dass zwei Transportmodule 1/1 nebeneinander angeordnet sind. Die Erfindung beschränkt sich jedoch nicht nur auf die Anzahl von zwei Transportmodulen 1/1. Wenn es erforderlich ist, ist es selbstverständlich auch ermöglicht, eine Vielzahl von Transportmodulen nebeneinander bzw. übereinander oder beides gleichzeitig vorzusehen.

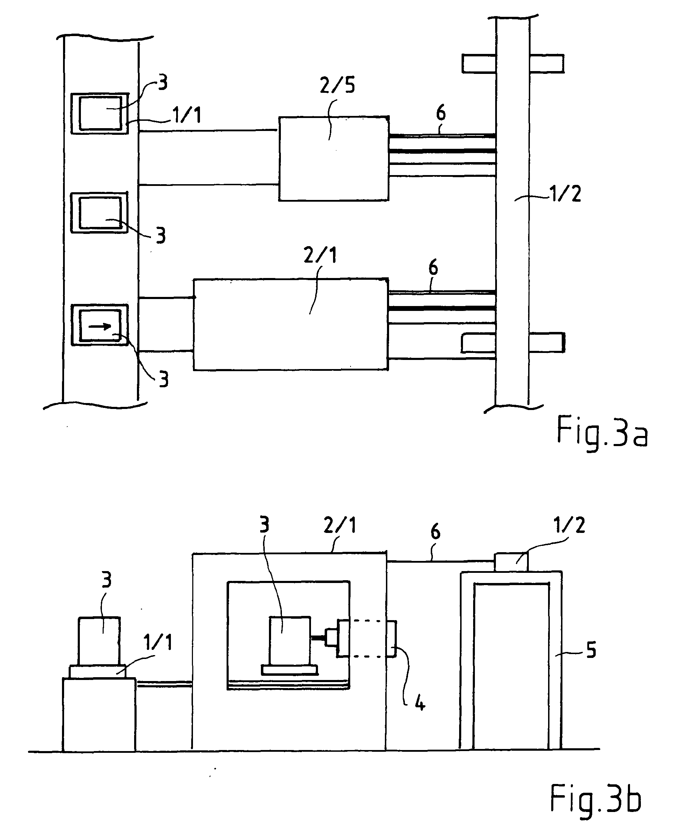

Die Figuren 3 a und 3 b zeigen einen Teilausschnitt einer weiteren Ausführungsform der Erfindung. Die Figur 3 a ist dabei eine Draufsicht auf einen Teil eines Produktionssystems nach der Erfindung. Mit dem Bezugszeichen 1/1 ist dabei wieder ein Transportmodul beispielsweise ein Transportband bezeichnet, auf dem sich Werkstücke 3 befinden. Mit dem Kästchen 2/1 ist beispielsweise ein Zerspanungsmodul bezeichnet, in welches ein Werkstück 3 transportiert wird. Mit dem weiteren Kästchen 2/5 ist ein Oberflächenbehandlungsmodul andeutet, in dem beispielsweise die Oberflächen von Werkstücken 3 bearbeitet werden können, um glattere Oberflächen des Werkstückes zu erhalten. Der Vorteil der Anordnung gemäß der Figuren 3 a und b ist der, dass sich ein Versorgungsmodul 1/2 auf der rechten Seite der Prozessmodule 2 befindet. Hierbei ist ein Gestell 5, wie aus der Figur 3 b ersichtlich, derart angeordnet, dass beispielsweise Personen unterhalb dieses Gestells sich bewegen können und nicht durch die Bestandteile des Versorgungsmoduls 1/2, welches auf dem Gestell 5 angeordnet ist, behindert werden. Mit den Bezugszeichen 6 sind Leitungen oder Kabel oder dergleichen bezeichnet, die die Prozessmodule 2 mit den entsprechenden Medien oder Energie versorgen. Die Figur 3 b zeigt eine Schnittdarstellung durch die Ausführungsform der Figur 3 a. Dabei ist ebenfalls nur schematisch angedeutet, das Zerspanungsmodul 2/1 in der Mitte des Bildes zu sehen, in dem sich beispielsweise ein Werkstück 3 gerade zur Bearbeitung befindet. Das Bezugszeichen 4 bezeichnet eine Werkzeugspindel zur spanenden Bearbeitung des Werkstückes 3. Mit dem Bezugszeichen 6 sind die Leitungen bezeichnet, über die die Energie- und Medienzuführung in das Zerspanungsmodul 2/1 erfolgt. Wie bereits erwähnt ist das Gestell 5 derart ausgeführt, dass sich Personen problemlos darunter aufhalten und bewegen können. Dadurch wird die Unfallgefährdung erheblich eingeschränkt. Auf der linken Seite der Darstellung in der Fig. 3b ist ein Transportmodul 1/1 dargestellt, auf dem sich ebenfalls ein Werkstück 3 befindet.

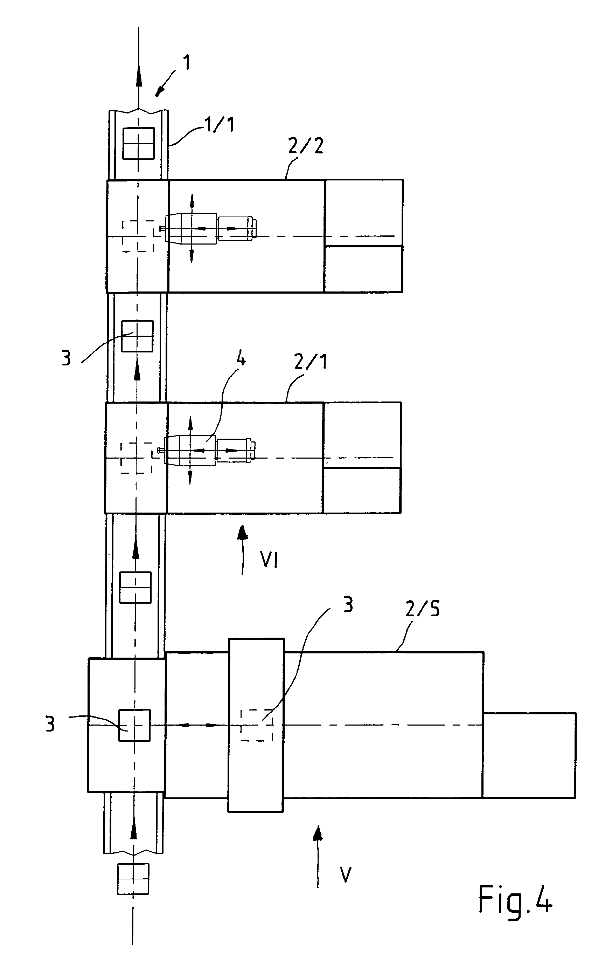

In Fig. 4 ist, ähnlich wie in Fig. 3a, 3b, eine weitere Variante der Ausgestaltung des erfindungsgemäßen Produktionssystemes gezeigt. Es sind hierbei längs der Transporteinheit 1/1 eine Mehrzahl von Prozeßmodulen 2/5, 2/1, 2/2 angeordnet.

Das Prozeßmodul 2/5 ist zum Beispiel ein Bearbeitungszentrum mit der Option für komplexere Bearbeitungen, Prozeßmodule 2/1, 2/2 führen hingegen nur einige wenige Bearbeitungsschritte aus. Das Logistikmodul 1 ist in diesem Ausführungsbeispiel einseitig auf der linken Seite bezüglich der Prozeßmodule 2 angeordnet.

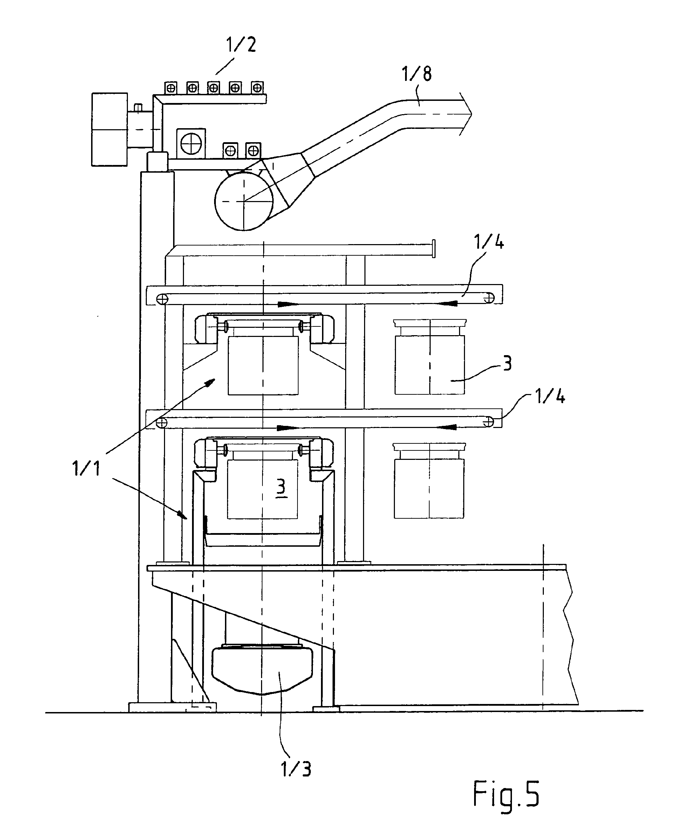

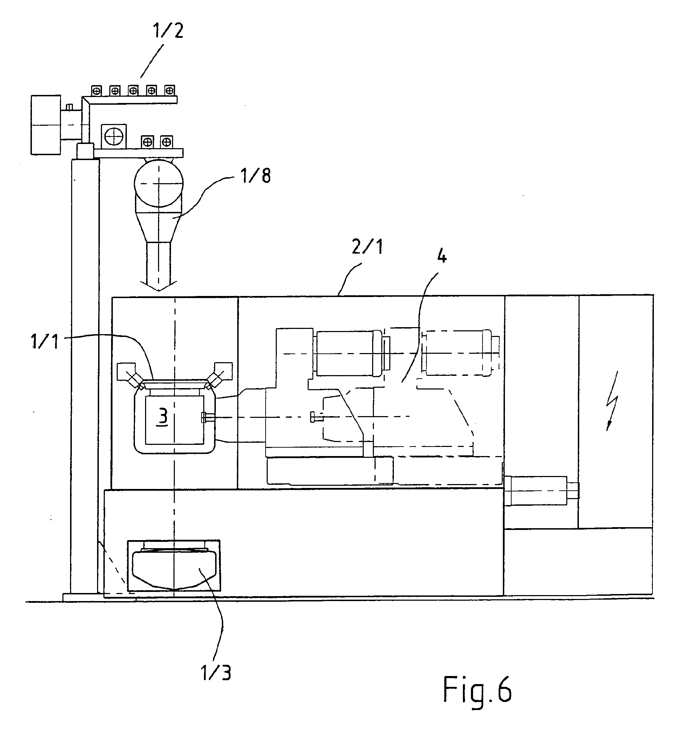

Fig. 5, 6 zeigen Ansichten in Transportrichtung innerhalb des erfindungsgemäßen Produktionssystemes. Die Ansichten entsprechen den Pfeilen V, VI in Fig. 4. Es fällt hierbei auf, daß nach dem ersten, komplexer arbeitenden Bearbeitungszentrum 2/5 als Prozeßmodul, zu welchem die zu bearbeitenden Werkstücke in zwei Etagen übereinander zu- und abgefördert werden (Fig. 5) in Fig. 6 eine serielle Bearbeitung vorgesehen ist, da hier die Transporteinheit 1/1 durch den Bearbeitungsraum des Prozeßmodules hindurchgeht. Hierzu ist in Fig. 4 in dem Prozeßmodul 2/5 ein Werkstück 3 gestrichelt angedeutet, das rechts von der Transporteinheit 1/1 entfernt wird. Die Anordnung ist dabei so gewählt (Fig. 5), daß in der oberen Transporteinheit 1/1 die noch nicht bearbeiteten Rohteile angefördert werden, die dann in der Bearbeitungseinheit 2/5 bearbeitet werden und die dann dort auf das untere Ausförderband 1/1 für bearbeitete Werkstücke abgegeben werden. Eine solche Anordnung erlaubt auch prinzipiell eine retundante Anordnung von Prozeßmodulen oder aber die parallele Bearbeitung, um eine entspechende Leistung bzw. Produktivität zu erreichen. Da die Bearbeitungsschritte in den Prozeßmodulen 2/1, 2/2 kürzer sind, ist die Verweildauer der Werkstücke 3 in diesen deutlich geringer, weswegen diese Bearbeitungsschritte in einer seriellen Abfolge erfolgen können. Gegebenenfalls sind eingangs- oder ausgangsseitig der doppelstöckigen Anordnung gemäß Fig. 5 Aufzüge vorgesehen, um die Werkstücke in die richtige Lage übereinander der Zu- oder Abförderbänder zu bringen.

In dem in Fig. 3b dargestellten Ausführungsbeispiel finden sich Prozeßmodule 2 zwischen der Versorgungs- und Entsorgungseinheit 2/2 und der Transporteinheit 1/1. In den in Fig. 5, 6 gezeigten Ausgestaltungen befinden sich diese übereinander, wobei zusätzlich im Bereich der Entsorgung auch ein Abluftkanal 1/8 angeordnet ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Produktionssystem, insbesondere Bearbeitungslinie, welche modular einerseits durch ein oder mehrere Prozeßmodule gebildet ist, die Werkstücke bearbeiten und andererseits durch mindestens ein Logistikmodul gebildet ist, und das Logistikmodul für einen Transport der Werkstücke sorgt, wobei das Logistikmodul als vorgefertigtes Systemmodul eine Vielzahl von Prozeßmodulen mit Werkstücken ver- und entsorgt und das Prozeßmodul als Systemmodul an dem Logistikmodul anschließbar ist.

2. Produktionssystem, insbesondere Bearbeitungslinie für die Produktion und/oder die Bearbeitung von Werkstücken, Bauteilen oder dergleichen, bestehend aus unterschiedlichen als Systemmodul ausgebildeten Modultypen für die Bearbeitung und den Transport, die in beliebiger Anzahl miteinander verbind- bzw. kombinierbar sind.

3. Produktionssystem nach Anspruch 1, **dadurch gekennzeichnet, daß** das Prozeßmodul und das Logistikmodul voneinander getrennte Systemmodule sind.

4. Produktionssystem nach einem oder beiden der vorhergehenden Ansprüche, **dadurch gekennzeichnet, daß** das Prozeßmodul eine Werkstückver- beziehungsweise -entsorgungseinheit aufweist, die das Werkstück von dem am Prozeßmodul vorbeiführenden Logistikmodul in das Prozeßmodul bringt und hernach wieder zum Logistikmodul transportiert und/oder das Prozeßmodul entweder direkt am Logistikmodul angeordnet ist oder über eine Werkstückver- beziehungsweise -entsorgungseinheit mit Werkstücken ver- und entsorgt wird und nur das Logistikmodul für einen Transport der Werkstücke zu den Prozeßmodulen sorgt.

5. Produktionssystem nach einem oder mehreren der vorhergehenden Ansprüche, **dadurch gekennzeichnet, daß** das Logistikmodul (1 ) für den Transport der Werkstücke (3) innerhalb des Systems eine Transporteinheit (1/1) aufweist und/oder das Logistikmodul (1) für den Transport von Energie und für den Prozeß notwendiger Medien eine Leitungseinheit sowohl für die Versorgung der Prozeßmodule (2) wie auch für deren Entsorgung aufweist und/oder das Logistikmodul (1) durch ein Gestell angegeben ist, welches etagenartig angeordnet wenigstens zwei Transportmodule (1/1) aufweist, unterhalb der Transportmodule (1/1) ein Entsorgungsmodul (1/3) bzw. ein Teil davon, beispielsweise eine Entsorgungsrinne für ablaufendes Kühl- bzw. Schmiermittel, Späne oder dergleichen, angeordnet ist und in einer weiteren durch das Gestell angegebenen Ebene das Versorgungsmodul (1/2) bzw. ein Teil davon, beispielsweise Rohrleitungen für Kühlwasser, Prozeßgase, Kabel oder dergleichen angeordnet ist.

6. Produktionssystem nach einem oder mehreren der vorhergehenden Ansprüche, **gekennzeichnet durch** ein Verzweigungsmodul (1/4) als Systemmodul vorgesehen ist, welches dazu dient, mehrere Logistikmodule (1) winkelförmig in einer Ebene und/oder in verschiedenen Ebenen miteinander zu verbinden.

7. Produktionssystem nach einem oder mehreren der vorhergehenden Ansprüche, **dadurch gekennzeichnet, daß** an dem bzw. den Transportmodulen (1/1) Verzweigungsmodule (1/4) korrespondierend für eine Übergabe bzw. Übernahme zu den Prozeßmodulen (2) angeordnet sind und/oder das Verzweigungsmodul (1/4), Be- und entlademodule und/oder Ver- bzw. Entpackungsmodule bzw. -stationen umfaßt und/oder das Verzweigungsmodul (1/4) durch mindestens je eine Weiche, Drehstation, Aufzugsstationen zur Verteilung der Werkstücke (3) beziehungsweise Paletten in unterschiedlichen Transportebenen und Um- bzw. Übersetzer oder dergleichen angegeben ist.

8. Produktionssystem nach einem oder mehreren der vorhergehenden Ansprüche, **dadurch gekennzeichnet, daß** das Produktionssystem (1) ein Versorgungsmodul (1/2) als Systemmodul aufweist, das die Versorgung der Prozeßmodule (2) mit Engerie und Medien gewährleistet und/oder das Produktionssystem ein Entsorgungsmodul (1/3) als Systemmodul aufweist, um Prozessabfälle und verbrauchte Hilfsstoffe zu sammeln und gegebenenfalls aufzubereiten beziehungsweise abzuführen.

9. Produktionssystem nach einem oder mehreren der vorhergehenden Ansprüche, **dadurch gekennzeichnet, daß** ein aus Versorgungsmodul (1/2) und Entsorgungsmodul (1/3) gebildetes Betriebsmodul, welches sowohl Versorgungs- als auch Entsorgungsaufgaben des Produktionssystems als zusammenformendes Systemmodul übernimmt.

10. Produktionssystem nach einem oder mehreren der vorhergehenden Ansprüche, **gekennzeichnet durch** ein Logistikmodul (1), vorzugsweise mit eigenem modularen Aufbau, welches für
- den Transport der Werkstücke innerhalb des Systems
- die Versorgung der Prozeßmodule mit Energie und Medien
- die Abfuhr von Prozessrest- und Hilfsstoffen aus den Prozeßmodulen,
- die Bereitstellung der Datenübertragungsmittel für den Informations- und Datenaustausch innerhalb des Systems und
- den Schutz von Personen vor Gefährdungen wie gefahrbringenden Bewegungen, Lärm, Verbrennungen bzw. Verbrühungen oder dergleichen
ausgebildet ist und/oder das Produktionssystem **durch** ein Logistikmodul (1) gekennzeichnet ist, welches mit Schnittstellen zum Anschluß bzw. Verbinden mindestens eines Prozeßmoduls (2) und/oder zum Anschluß mindestens eines weiteren Logistik- oder Transportmodules (1/1), oder von Versorgungsmodulen (1/2), Entsorgungsmodulen (1/3) und Verzweigungsmodulen (1/4) versehen ist.

11. Produktionssystem nach einem oder mehreren der vorhergehenden Ansprüche, **dadurch gekennzeichnet, daß** das Versorgungsmodul (1/2) derart ausgebildet ist, daß es Strom, Flüssigkeiten, Prozessgase, Gase und/oder unter Druck stehende Gase bzw. andere in den Prozeßmodulen (2) benötigten Medien aufbereitet und/oder zur Verfügung stellt und/oder das Versorgungsmodul (1/2) zentral die Bereitstellung der in den Prozeßmodulen (2) benötigten Medien zumindest für einen Teil der Prozeßmodule (2), vorzugsweise für alle in den Produktionssystem vorhandenen Prozeßmodule (2) gleichzeitig übernimmt und/oder das Versorgungsmodul (1/2) Baugruppen für eine gemeinsame Versorgung mehrerer, vorzugsweise aller Prozeßmodule (2) beinhaltet, wie Hydraulikaggregat, Kühl-Schmiermittelaggregat, Druckluftaggregat, Aggregat zur thermischen Stabilisierung der Prozeßmodule, beispielsweise durch Bereitstellung temperierten Wassers, Gasversorgungsaggregat, Energieversorgungs- und Schaltstationen bzw. -aggregate.

12. Produktionssystem nach einem oder mehreren der vorhergehenden Ansprüche, **dadurch gekennzeichnet, daß** ein Entsorgungsmodul (1/3) vorgesehen ist, welches zentral der Entsorgung zumindest für einen Teil der Prozeßmodule (2) oder des Produktionssystemes insgesamt, von Abfällen, verbrauchten Hilfsstoffen dient, und gegebenenfalls das Entsorgungsmodul eine zentrale Sammlung und Aufbereitung dieser Stoffe realisiert und/oder das Entsorgungsmodul (1/3) zumindest einen Teil der verbrauchten Hilfsstoffe, Kühlmittel, Prozeßgase und dergleichen sammelt, aufbereitet und dem Produktionskreislauf des Produktionssystems wieder zuführt und/oder ein Entsorgungsmodul (1/3) vorgesehen ist, welches zentral für mehrere, vorzugsweise alle Prozeßmodule (2) die Absaugung von Dämpfen, Nebel, Rauch oder dergleichen über eine gemeinsame zentrale Absauganlage vornimmt.

13. Produktionssystem nach einem oder mehreren der vorhergehenden Ansprüche, **dadurch gekennzeichnet, daß** das Transportmodul (1/1) durch Förderbahnen wie Friktionsrollenbahnen, Laufbänder, Förderbänder, Gleitbahnen oder dergleichen angegeben ist und/oder das Transportmodul (1/1) durch mindestens zwei- oder mehretagig übereinander angeordnete Förderbahnen angegeben ist und/oder das Transportmodul (1/1) durch wenigstens zwei oder mehrere nebeneinander angeordnete Förderbahnen angegeben ist.

14. Produktionssystem nach einem oder mehreren der vorhergehenden Ansprüche, **dadurch gekennzeichnet, daß** das Versorgungsmodul (1/2), das Entsorgungsmodul (1/3) oder das Betriebsmodul ein schallgedämmtes Gehäuse aufweist, welches die Lärm erzeugenden Aggregate, wie Kompressoren usw., aufnimmt.

15. Produktionssystem nach einem oder mehreren der vorhergehenden Ansprüche, **dadurch gekennzeichnet, daß** das Gehäuse eine Klimatisierung bzw. Kühlung aufweist zur Abfuhr der von den Aggregaten erzeugten Abwärme.

16. Produktionssystem nach einem oder mehreren der vorhergehenden Ansprüche, **gekennzeichnet durch** eine zentrale Energieversorgung, zum Beispiel berührungsfrei geführte Stromschienen mit Trennschaltern und mit kontaktfreien Abgriff oder **durch** Kabel geführt, welche in dem bzw. den Versorgungsmodul(en) (1/2) integriert ist.

17. Produktionssystem nach einem oder mehreren der vorhergehenden Ansprüche, **gekennzeichnet durch** ein gemeinsames Brandschutzmodul bzw. -system.

18. Produktionssystem nach einem oder mehreren der vorhergehenden Ansprüche, **dadurch gekennzeichnet, daß** die unterschiedlichen Teilsysteme beziehungsweise Modularten, insbesondere innerhalb des Versorgungsmoduls (1/2) redundant ausgeführt sind und/oder die Systemmodule vormontiert und als Einheit ohne oder mit minimalem Demontageaufwand transportierbar ausgebildet sind.

19. Produktionssystem nach einem oder mehreren der vorhergehenden Ansprüche, **dadurch gekennzeichnet, daß** das Prozeßmodul ein Logistikelement aufweist, und das Prozeßmodul an dem Logistikelement mit dem Logistikelement anschließbar ist und/oder das Prozeßmodul ein Versorgungselement aufweist, welches an das Versorgungsmodul anschließbar ist und/oder das Prozeßmodul (2) durch Maschinen zur Bearbeitung von Werkstücken, beispielsweise zur Zerspanung, Umformung, zum Fügen bzw. Trennen, durch Prüfstationen, Montagestationen, Justagestationen, Oberflächenbehandlungsstationen, Ver- oder entpackungsstationen, Kennzeichnungsstationen, zur Kennzeichnung von Werkstücken, Palettenbelade- und Palettenentlade- und Reinigungsstationen vorzugsweise mit modulartigem Aufbau ausgebildet ist.

20. Produktionssystem nach einem oder mehreren der vorhergehenden Ansprüche, **gekennzeichnet durch** ein zentrales Versorgungsmodul und/oder ein integriertes Verund Entsorgungsmodul.

21. Produktionssystem nach einem oder mehreren der vorhergehenden Ansprüche, **gekennzeichnet durch** ein gemeinsames Gestell des Logistikmoduls für das Transportmodul und das Ver- bzw. Entsorgungsmodul oder für das Transportmodul einerseits und das Ver- bzw. Entsorgungsmodul andererseits je eigene Gestelle vorgesehen sind.
